(19) Europäisches Patentamt
European Patent Office
Office européen des brevets

(11) **EP 2 779 282 A1**

(12) **EUROPEAN PATENT APPLICATION**

(43) Date of publication:
**17.09.2014 Bulletin 2014/38**

(51) Int Cl.:
***H01M 4/131*** (2010.01)

(21) Application number: **14157840.1**

(22) Date of filing: **05.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.03.2013 JP 2013052397**

(71) Applicant: **Kabushiki Kaisha Toshiba**
**Tokyo 105-8001 (JP)**

(72) Inventors:
• **Watanabe, Hidetoshi**
  **Tokyo, 105-8001 (JP)**

• **Murashi, Yasuaki**
  **Tokyo, 105-8001 (JP)**
• **Tatebayashi, Yoshinao**
  **Tokyo, 105-8001 (JP)**
• **Saruwatari, Hidesato**
  **Tokyo, 105-8001 (JP)**
• **Yoshikawa, Hikaru**
  **Tokyo, 105-8001 (JP)**

(74) Representative: **HOFFMANN EITLE**
**Patent- und Rechtsanwälte**
**Arabellastrasse 4**
**81925 München (DE)**

(54) **Positive electrode and pore size distribution for Lithium intercalation**

(57)     In general, according to one embodiment, a positive electrode (1) is provided. The positive electrode (1) includes a positive electrode current collector (11) and a positive-electrode-mixture layer (12) formed on the positive electrode current collector (11). The positive-electrode-mixture layer (12) includes first pores and second pores. Pore size diameters $D_1$ and $D_2$ of the first and the second pores satisfy relationship: $0.03 < D_1/D_2 < 0.8$. Total volumes $V(D_1)$ and $V(D_2)$ of the first and the second pores satisfy the following relationship: $2 < \log V(D_1)/\log V(D_2) < 6$.

F I G. 1

**Description**

FIELD

Embodiments described herein relate generally to a positive electrode, and a battery.

BACKGROUND

In recent years, environmental awareness has grown, increasing the use of secondary batteries as power for electric vehicles such as an electric bicycle, an electric motorcycle, and a forklift. The secondary batteries are required to have high safety, a long life, and a high input-output performance for their application. However, if an electrode containing an active material having a large particle size is pressed in an electrode production process, the active material is crushed and the distance between the crushed active materials is increased, which makes it difficult to produce electric conduction. Thus, when a battery is produced by using such an electrode that hinders electric conduction, input characteristics are disadvantageously decreased.

A battery having a high density and an excellent permeability of the nonaqueous electrolyte is provided by using a positive electrode having two peak tops in a pore distribution curve obtained by a mercury intrusion method. In the positive electrode, a peak top of the smaller pore size diameter ($D_1$) has a pore size diameter within a range of 140 to 220 nm, and a peak top of the larger pore size diameter ($D_2$) has a pore size diameter within a range of 330 to 910 nm.

On the other hand, as a positive electrode composition (active material), a lithium composite oxide is used, wherein a pore size diameter ($D_a$) at a peak giving the maximum differential pore volume is within a range of 0.8 to 5.0 $\mu$m in a pore distribution measured by a mercury intrusion method, and a pore size diameter ($D_b$) at a sub-peak giving a differential pore volume value of 10% or more of the maximum differential pore volume is within a range of 0.5 to 2.0 $\mu$m.

BRIEF DESCRIPTION OF THE DRAWINGS

FIG. 1 is a graph showing a pore size diameter distribution of a positive electrode as an example according to a first embodiment;
FIG. 2 is a partially broken plan view schematically showing the positive electrode as an example according to the first embodiment;
FIG. 3 is a partially broken perspective view of a battery as an example according to a second embodiment;
FIG. 4 is an enlarged sectional view of a portion A of the battery of FIG. 3; and
FIG. 5 is a partially broken developed view schematically showing an electrode group having a coiled structure as an example of that may be included in the battery according to the second embodiment.

DETAILED DESCRIPTION

In general, according to one embodiment, a positive electrode is provided. The positive electrode includes a positive electrode current collector and a positive-electrode-mixture layer formed on the positive electrode current collector. The positive-electrode-mixture layer includes a positive electrode active material. The positive-electrode-mixture layer includes first pores and second pores. The first pores have a highest abundance ratio in a pore size diameter distribution obtained by a mercury intrusion method. Each of the first pores has a pore size diameter of $D_1$. The second pores have a second highest abundance ratio in the pore size diameter distribution. Each of the second pores has a pore size diameter of $D_2$. The pore size diameter $D_1$ and the pore size diameter $D_2$ satisfy the following relationship: $0.03 < D_1/D_2 < 0.8$. A total volume $V(D_1)$ of the first pores and a total volume $V(D_2)$ of the second pores obtained from the pore size diameter distribution satisfy the following relationship: $2 < \log V(D_1)/\log V(D_2) < 6$.

The embodiments will be explained below with reference to the drawings. In this case, the structures common to all embodiments are represented by the same symbols and duplicated explanations will be omitted. Also, each drawing is a typical view for explaining the embodiments and for promoting the understanding of the embodiments. Though there are parts different from an actual device in shape, dimension and ratio, these structural designs may be properly changed taking the following explanations and known technologies into consideration.

(First Embodiment)

According to a first embodiment, a positive electrode is provided. The positive electrode includes a positive electrode current collector and a positive-electrode-mixture layer formed on the positive electrode current collector. The positive-electrode-mixture layer includes a positive electrode active material. The positive-electrode-mixture layer includes first pores and second pores. The first pores have a highest abundance ratio in a pore size diameter distribution obtained by a mercury intrusion method. Each of the first pores has a pore size diameter of $D_1$. The second pores have a second highest abundance ratio in the pore size diameter distribution. Each of the second pores has a pore size diameter of $D_2$. The pore size diameter $D_1$ and the pore size diameter $D_2$ satisfy the following relationship: $0.03 < D_1/D_2 < 0.8$. A total volume $V(D_1)$ of the first pores and a total volume $V(D_2)$ of the second pores satisfy the following relationship: $2 < \log V(D_1)/\log V(D_2) < 6$. The total volume of the first pores and the total volume of the second pores in the positive-electrode-mixture layer are obtained from the pore size diameter distribution.

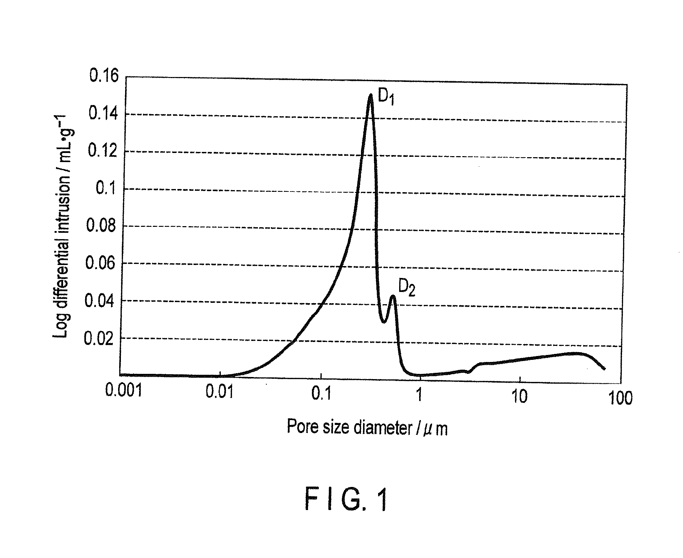

FIG. 1 is a graph showing the pore size diameter distribution of a positive electrode as an example according to the first embodiment. In FIG. 1, the abscissa axis is a pore size diameter ($\mu$m), and the ordinate axis is a Log differential intrusion ($mL \cdot g^{-1}$). The logarithm of the total volume of the pores having the pore size diameters corresponds to the abundance ratio of each of the pores having each of the pore size diameters. In the pore size diameter distribution shown in FIG. 1, a pore size diameter $D_1$ of pores having the highest abundance ratio is 0.27 $\mu$m, and a pore size diameter $D_2$ having the second highest abundance ratio is 0.51 $\mu$m.

In the positive electrode in which the pore size diameter $D_1$ and the pore size diameter $D_2$ in the positive-electrode-mixture layer satisfy the relationship: $0.03 < D_1/D_2 < 0.8$, and the total volume $V(D_1)$ of the first pores and the total volume $V(D_2)$ of the second pores satisfy the relationship: $2 < \log V(D_1)/\log V(D_2) < 6$, the positive-electrode-mixture layer can have a filling density capable of permitting sufficient permeation of an electrolytic solution into the positive-electrode-mixture layer, and can also have a distance between the positive electrode active materials that enables sufficient conductivity between the positive electrode active materials in the positive-electrode-mixture layer. As the permeability of the electrolytic solution into the positive-electrode-mixture layer is higher, an electrode reaction in the positive-electrode-mixture layer is accelerated. Therefore, the positive electrode according to the first embodiment can accelerate the electrode reaction and can also have sufficient conductivity. Thus, the positive electrode according to the first embodiment can realize a battery having excellent input-output characteristics. Furthermore, the positive electrode according to the first embodiment can have high conductivity between the active materials in the positive-electrode-mixture layer as described above, which can reduce the content of a conductive agent and a binder required in the positive-electrode-mixture layer. As a result, the positive electrode according to the first embodiment can prevent a decrease in a discharge capacity.

In the positive-electrode-mixture layer, the pore size diameter $D_1$ and the pore size diameter $D_2$ preferably satisfy the relationship: $0.1 < D_1/D_2 < 0.65$. The positive electrode in which the pore size diameter $D_1$ and the pore size diameter $D_2$ satisfy the above relationship in the positive-electrode-mixture layer has a more excellent balance between the filling density of the positive-electrode-mixture layer and the distance between the positive electrode active materials in the positive-electrode-mixture layer. Therefore, a battery having more excellent input-output characteristics can be produced by using such a positive electrode.

A $D_1/D_2$ of 0.03 or less in the positive-electrode-mixture layer means that the pore size diameter $D_1$ of the first pores is too small compared with the pore size diameter $D_2$ of the second pores, or the pore size diameter $D_2$ of the second pores is too large compared with the pore size diameter $D_1$ of the first pores. When the pore size diameter $D_1$ is too small compared with the pore size diameter $D_2$, the filling density of the positive-electrode-mixture layer is too high, which inhibits the permeation of the electrolytic solution into the positive-electrode-mixture layer. When the pore size diameter $D_2$ is too large compared with the pore size diameter $D_1$, the distance between the positive electrode active materials in the positive-electrode-mixture layer is too great, which decreases the conductivity between the positive electrode active materials. Therefore, the production of a battery using a positive electrode having a $D_1/D_2$ of 0.03 or less in the positive-electrode-mixture layer leads to a decrease in the input characteristics of the battery.

A $D_1/D_2$ of 0.8 or more but less than 1 in the positive-electrode-mixture layer means that the pore size diameter $D_1$ of the first pores and the pore size diameter $D_2$ of the second pores are close to each other.

Examples of the case where the pore size diameter $D_1$ and the pore size diameter $D_2$ are close to each other include a case where the pore size diameter $D_2$ is as small as the pore size diameter $D_1$. The second pores contribute to the permeability of the electrolytic solution into the positive-electrode-mixture layer. The contribution degree may depend on the pore size diameter $D_2$. Therefore, when the pore size diameter $D_2$ of the second pores is as small as the pore size diameter $D_1$ of the first pores, the permeability of the electrolytic solution into the positive-electrode-mixture layer may be decreased.

When the pore size diameter $D_1$ and the pore size diameter $D_2$ are closer to each other, the pore size diameter $D_1$ may be as great as the pore size diameter $D_2$. When the pore size diameter $D_1$ is as great as the pore size diameter $D_2$, the distance between the positive electrode active materials in the positive-electrode-mixture layer is large. Then, the conductivity in the positive-electrode-mixture layer is decreased.

Thus, when the battery is produced by using the positive electrode in which $D_1/D_2$ in the positive-electrode-mixture layer is 0.8 or more but less than 1, the permeability of the electrolytic solution into the positive-electrode-mixture layer is decreased, or the distance between the positive electrode active materials in the positive-electrode-mixture layer is increased, which leads to the decrease in the input characteristics of the battery.

A $D_1/D_2$ of 1 or more in the positive-electrode-mixture layer means that the pore size diameter $D_1$ is equal to or greater than the pore size diameter $D_2$. When the pore size diameter $D_1$ of the first pore is equal to or greater than the pore size diameter $D_2$ of the second pore, the distance between the positive electrode active materials in the positive-electrode-mixture layer is large. Therefore, when the battery is produced by using the positive electrode in which $D_1/D_2$ in the positive-electrode-mixture layer is 1 or more, the conductivity between the positive electrode active materials is decreased, which may decrease the input characteristics of the battery.

In the positive-electrode-mixture layer, a total volume $V(D_1)$ of the first pores and a total volume $V(D_2)$ of the second pores preferably satisfy the relationship: $2.3 < \log V(D_1)/\log V(D_2) < 4.5$. The positive-electrode-mixture layer in which the total volume $V(D_1)$ of the first pores and the total volume $V(D_2)$ of the second pores satisfy the above relationship has a more excellent balance between the filling density of the positive-electrode-mixture layer and the distance between the positive electrode active materials in the positive-electrode-mixture layer. Therefore, a battery having excellent input-output characteristics can be produced by using such a positive electrode.

A $\log V(D_1)/\log V(D_2)$ of 2 or less in the positive-electrode-mixture layer means that the total volume of the first pores is close to the total volume of the second pores, that is, a number of second pores exist. Since a number of second pores exist in the positive electrode in which the $\log V(D_1)/\log V(D_2)$ is 2 or less, the number of places where the distance between the active materials is large is increased, which decreases conductivity. Therefore, when the battery is produced by using the positive electrode containing such a positive-electrode-mixture layer, the distance between the positive electrode active materials in the positive-electrode-mixture layer is increased, which leads to the decrease in the input characteristics of the battery.

On the other hand, a $\log V(D_1)/\log V(D_2)$ of 6 or more in the positive-electrode-mixture layer means that the total volume of the first pores is too large compared with the total volume of the second pores. As described above, the second pore can contribute to the permeability of the electrolytic solution into the positive-electrode-mixture layer. The positive-electrode-mixture layer in which the $\log V(D_1)/\log V(D_2)$ is 6 or more has few second pores. Therefore, the permeability of the electrolytic solution into the positive-electrode-mixture layer is poor. Therefore, when the battery is produced by using the positive electrode containing such a positive-electrode-mixture layer, the input characteristics of the battery are decrease.

The pore size diameter $D_1$ of the first pores is preferably within a range of 0.23 $\mu$m to 0.6 $\mu$m. The pore size diameter $D_2$ of the second pores is preferably within a range of 0.25 $\mu$m to 6 $\mu$m. The positive electrode in which the pore size diameters of the first pores and second pores in the positive-electrode-mixture layer are within the above range has a more excellent balance between the filling density of the positive-electrode-mixture layer and the distance between the positive electrode active materials in the positive-electrode-mixture layer. Therefore, a battery having more excellent input-output characteristics can be produced by using such a positive electrode. It is preferable that the pore size diameter $D_1$ of the first pores is within a range of 0.25 $\mu$m to 0.5 $\mu$m, and the pore size diameter $D_2$ of the second pores is within a range of 0.3 $\mu$m to 4 $\mu$m.

[Materials]

Next, materials capable of being used in the positive-electrode-mixture layer and the positive electrode current collector included in the positive electrode according to the first embodiment will be described.

<Positive-Electrode-Mixture Layer>

The positive-electrode-mixture layer can contain a conductive agent and a binder in addition to the positive electrode active material. The conductive agent may be formulated to improve the current collection performance and suppress the contact resistance between the positive electrode active material and the positive electrode current collector. The binder may be formulated to fill gaps of the dispersed positive electrode active materials and also to bind the positive electrode active material with the positive electrode current collector.

<Positive Electrode Active Material>

As positive electrode active material, a substance capable of being charged and discharged in combination with a negative electrode active material can be used. As an example capable of being charged and discharged in combination with a negative electrode active material capable of absorbing and releasing lithium ions at a potential of 0.4 V (vs. Li/Li$^+$), lithium-manganese composite oxide, lithium-cobalt composite oxide, lithium-manganese-cobalt composite oxide, and lithium-nickel composite oxide can be included.

<Conductive Agent>

Examples of the conductive agent include acetylene black, carbon, and graphite.

<Binder>

Examples of the binder include polytetrafluoroethylene (PTEF), polyvinylidene fluoride (PVdF), and fluorine-based rubber.

<Positive Electrode Current Collector>

For example, a metallic foil or an alloy foil can be used as the positive electrode current collector. Examples of the metallic foil include an aluminum foil, a copper foil, and a nickel foil. Examples of the alloy foil include an aluminum alloy foil, a copper alloy foil, and a nickel alloy foil.

[Production Method]

The positive electrode according to the first embodiment can be produced as follows, for example.
First, a positive electrode active material, an optional conductive agent, and a binder are put into a suitable solvent, for example, N-methylpyrrolidone. These are kneaded to prepare a positive electrode slurry. The kneading can be performed by using, for example, a rotation-and-revolution mixer or a bead mill.
When the positive electrode slurry is prepared, the formulating ratio of the positive electrode active material, the conductive agent, and the binder is preferably within a range of 73 to 95% by mass for the positive electrode active material, 3 to 20% by mass for the conductive agent, and 2 to 7% by mass for the binder.
The slurry obtained as described above is applied onto the positive electrode current collector. By drying and pressing the applied slurry, the positive electrode containing the positive electrode current collector and the positive-electrode-mixture layer formed on the positive electrode current collector can be obtained.
Next, a method for controlling the pore size diameter distribution in the positive-electrode-mixture layer will be described.
The pore size diameter distribution in the positive-electrode-mixture layer can be controlled by, for example, selecting the grain size of the positive electrode active material for dispersion, changing the dispersion condition of the slurry for forming the positive-electrode-mixture layer, and changing the press condition of the positive-electrode-mixture layer.
When the rotation-and-revolution mixer is used to produce the slurry, the grain size of the positive electrode active material can be controlled by changing the slurry dispersion condition according to the rotation-and-revolution mixer, for example. The pore size diameter distribution of the positive electrode produced by using the slurry obtained as a result can be controlled.
Examples of the dispersion condition of the slurry include the rotation number, rotation time, and bead diameter or the like of the rotation-and-revolution mixer.
When the rotation number of the rotation-and-revolution mixer is increased, the number of collisions of beads is increased. As a result, the components of the positive electrode are densely arranged in the positive-electrode-mixture layer obtained by using the slurry, which decreases the pore size diameter of the positive-electrode-mixture layer. On the other hand, when the rotation number of the rotation-and-revolution mixer is decreased, the number of collisions of the beads is decreased. As a result, the components of the positive electrode are coarsely arranged in the positive-electrode-mixture layer obtained by using the slurry, which increases the pore size diameter of the positive-electrode-mixture layer.
When the rotation time of the rotation-and-revolution mixer is lengthened, the number of collisions of the beads is increased. As a result, the components of the positive electrode are densely arranged in the positive-electrode-mixture layer obtained by using the slurry, which decreases the pore size diameter of the positive-electrode-mixture layer. On the other hand, when the rotation time of the rotation-and-revolution mixer is shortened, the number of collisions of the beads is decreased. As a result, the components of the positive electrode are coarsely arranged in the positive-electrode-mixture layer obtained by using the slurry, which increases the pore size diameter of the positive-electrode-mixture layer.
Furthermore, when the bead diameter is decreased, the contact surface area of the beads is increased. As a result, the components of the positive electrode are densely arranged in the positive-electrode-mixture layer obtained by using the slurry, which decreases the pore size diameter of the positive-electrode-mixture layer. On the other hand, when the bead diameter is increased, the contact surface area of the beads is decreased. As a result, the components of the positive electrode are coarsely arranged in the positive-electrode-mixture layer obtained by using the slurry, which increases the pore size diameter of the positive-electrode-mixture layer.

The positive electrode according to the first embodiment can employ various forms according to the requirements of the battery to be produced.

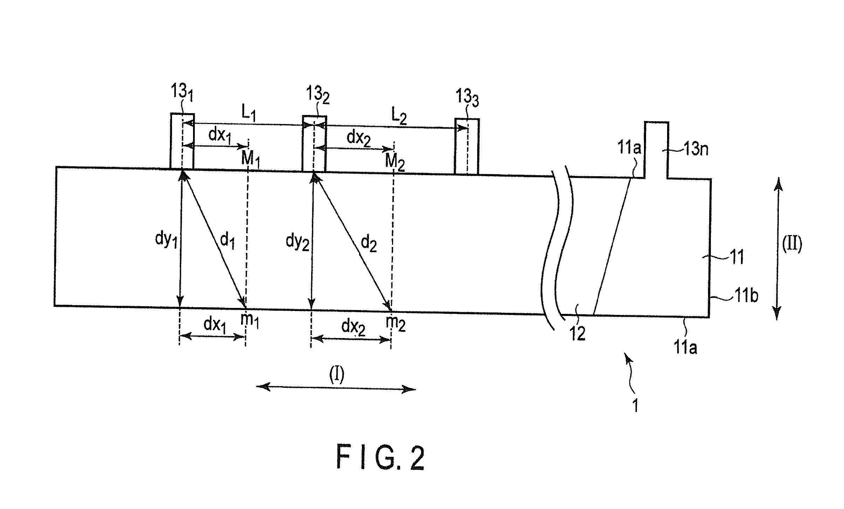

For example, the positive electrode according to the first embodiment can also have a structure shown in FIG. 2.

FIG. 2 is a partially broken plan view schematically showing the positive electrode as an example according to the first embodiment.

A positive electrode 1 shown in FIG. 2 contains a positive electrode current collector 11 and a positive-electrode-mixture layer 12 formed on the positive electrode current collector 11. FIG. 2 shows one end part of the positive electrode 1 shown on the right side in FIG. 2 with the positive-electrode-mixture layer 12 omitted.

The positive electrode current collector 11 extends in a first direction (I), and has a strip shape. The positive electrode current collector 11 has a pair of long sides 11a and a pair of short sides 11b.

The positive electrode current collector 11 includes n reed-shaped current collecting tabs $13_1$ to $13_n$ of the positive electrode 1. Each of the n current collecting tabs $13_1$ to $13_n$ extends from one of the pair of long sides of the positive electrode current collector 11.

In the positive electrode 1 shown in FIG. 2, a length of a half of a distance L in the first direction (I) between a middle point of one current collecting tab 13 and a middle point of another current collecting tab 13 adjacent to the one current collecting tab 13 among the n current collecting tabs $13_1$ to $13_n$ of the positive electrode 1 is dx. Here, each of the middle points is the middle point of the width of each of the current collecting tabs 13 in the direction parallel to the direction (I) of the long side 11a of the positive electrode current collector 11. A width of the positive-electrode-mixture layer 12 in a direction (II) perpendicular to the direction (I) of the long side 11a of the positive electrode current collector 11 is dy. The length dx and the width dy satisfy the relationship: $1.1 \leq dy/dx \leq 2.0$. That is, in the positive electrode 1 shown in FIG. 2, a length of a half of a distance $L_1$ in the first direction (I) between a middle point of a first current collecting tab $13_1$ located on the leftmost side in FIG. 2 and a middle point of a second current collecting tab $13_2$ located second from the left is $dx_1$, and each of the middle points is the middle point of the width of each of the current collecting tabs $13_1$ and $13_2$ in the direction parallel to the direction (I) of the long side 11a of the positive electrode current collector 11. A width of the positive-electrode-mixture layer 12 in a direction (II) perpendicular to a direction (I) of the long side 11a of the positive electrode current collector 11 is $dy_1$. The length $dx_1$ and the width $dy_1$ satisfy the relationship: $1.1 \leq dy_1/dx_1 \leq 2.0$. Similarly, a length of a half of a distance $L_2$ in the first direction (I) between the middle point of the second current collecting tab $13_2$ and a middle point of a third current collecting tab $13_3$ located third from the left is $dx_2$, and each of the middle points is the middle point of the width of each of current collecting tabs $13_2$ and $13_3$ in the direction parallel to the direction (I) of the long side 11a of the positive electrode current collector 11. A width of the positive-electrode-mixture layer 12 in a direction (II) perpendicular to a direction (I) of the long side 11a of the positive electrode current collector 11 is $dy_2$. The length $dx_2$ and the width $dy_2$ satisfy the relationship: $1.1 \leq dy_2/dx_2 \leq 2.0$. Although not shown, also for the third current collecting tab $13_3$ and the subsequent current collecting tabs, a length $dx_{n-1}$ and a width $dy_{n-1}$ satisfy the relationship: $1.1 \leq dy_{n-1}/dx_{n-1} \leq 2.0$.

In the positive electrode 1 in which the length dx and the width dy satisfy the relationship: $1.1 \leq dy/dx$, a distance between the positive electrode active material, which is contained in the positive-electrode-mixture layer 12 and has the longest distance from the current collecting tab 13 of the positive electrode 1, and the current collecting tab 13 of the positive electrode 1 can be shortened. That is, the distance of the positive electrode active material located at a position m from the current collecting tab 13 of the positive electrode 13 can be shortened. Here, the position m is located on the long side 11a from which the current collecting tab 13 does not extend, and separated by the width dy in a second direction (II) from a position M. The position M is separated by the length dx in the first direction (I) from the current collecting tab 13. As the distance between the positive electrode active material and the current collecting tab 13 is shorter, the moving distance of an electron can be shortened. As a result, the resistance value of the battery including the positive electrode 1 can be lowered. Therefore, when the positive electrode 1 shown in FIG. 2 is used, a battery having more excellent input-output characteristics can be produced.

The positive electrode 1 in which the length dx and the width dy satisfy the relationship: $dy/dx \leq 2.0$ can provide a battery having a more excellent effect of shortening the moving distance of the electron with respect to a cost required for a formation process of the current collecting tab 13, that is, a more excellent cost-effectiveness for an improvement in the input-output characteristics.

The length dx and the width dy more preferably satisfy the relationship: $1.5 \leq dy/dx \leq 1.9$. The positive electrode 1 can provide a battery having more excellent input-output characteristics and more excellent cost-effectiveness for the improvement in the input-output characteristics.

The positive electrode according to the first embodiment described above satisfies the relationship: $0.03 < D_1/D_2 < 0.8$. The total volume $V(D_1)$ of the first pores and the total volume $V(D_2)$ of the second pores obtained from the pore size diameter distribution satisfy the relationship: $2 < \log V(D_1)/\log V(D_2) < 6$. In the positive electrode, the positive-electrode-mixture layer can have a filling density capable of permitting sufficient permeation of the electrolytic solution into the positive-electrode-mixture layer and can have a distance between the positive electrode active materials that enables retaining sufficient conductivity between the positive electrode active materials in the positive-electrode-mixture layer. Therefore, the positive electrode according to the first embodiment can realize the battery having excellent input-output characteristics.

(Second Embodiment)

According to a second embodiment, a battery is provided. This battery includes the positive electrode according to the first embodiment and a negative electrode.

As described above, the positive electrode according to the first embodiment can realize the battery having excellent input-output characteristics. Therefore, the battery according to the second embodiment can have excellent input-output characteristics.

The negative electrode preferably contains a negative electrode active material capable of absorbing and releasing lithium ions at a potential of 0.4 V (vs. Li/Li$^+$) or more. The battery according to the second embodiment including such a negative electrode can suppress the deposition of lithium upon charging and discharging. Therefore, such a battery has more excellent rapid charge/discharge characteristics.

A pore size diameter distribution in a positive-electrode-mixture layer of the positive electrode included in the battery can be obtained by the following procedure, for example. First, the battery is fully discharged. For example, the battery is discharged until a voltage is lowered to be less than 0.5 V. Next, the battery is disassembled, and the positive electrode is taken out. The taken-out positive electrode is washed in the same solvent as that of the electrolytic solution of the battery. The pore size diameter distribution of the positive-electrode-mixture layer in the sample thus obtained can be obtained by using a mercury intrusion method.

Next, an example of the battery according to the second embodiment will be described in detail.

A nonaqueous electrolyte battery as this example includes an electrode group.

The electrode group includes the positive electrode according to the first embodiment and the negative electrode. The electrode group can further include a separator provided between the positive electrode and the negative electrode.

The positive electrode can contain a current collecting tab or tabs extending from the electrode group. Similarly, the negative electrode can contain a current collecting tab or tabs extending from the electrode group.

The battery in this example can further include a container. The electrode group may be housed in the container. The container can further house an electrolytic solution. The electrode group housed in the container may be impregnated with the electrolytic solution.

The battery as this example can further include a positive electrode terminal and a negative electrode terminal fixed to the container. The positive electrode terminal may be electrically connected to the current collecting tabs of the positive electrode. The negative electrode terminal may be electrically connected to the current collecting tabs of the negative electrode.

Next, components that can be included in the nonaqueous electrolyte battery according to the second embodiment will be described.

(1) Negative Electrode

The negative electrode can contain a negative electrode current collector and a negative-electrode-mixture layer formed on the negative electrode current collector. The negative active material can be contained in the negative-electrode-mixture. The negative-electrode-mixture layer can contain a conductive agent and a binder in addition to a negative electrode active material. The conductive agent may be formulated to improve the current collection performance and suppress the contact resistance between the negative electrode active material and the negative electrode current collector. The binder may be formulated to fill gaps of the dispersed negative electrode active materials and also to bind the negative electrode active material with the negative electrode current collector.

[Materials]

Hereinafter, materials capable of being used as the negative electrode active material, the conductive agent, the binder, and the negative electrode current collector will be described.

<Negative Electrode Active Material>

Examples of the negative electrode active material capable of absorbing and releasing lithium ions at a potential of 0.4 V (vs. Li/Li$^+$) or more include spinel-type lithium titanate represented by $Li_{4+x}Ti_5O_{12}$ (wherein x varies within a range of $-1 \leq x \leq 3$ by charge and discharge reactions), ramsdellite-type $Li_{2+x}Ti_3O_7$ (wherein x varies within a range of $-1 \leq x \leq 3$ by charge and discharge reactions), and a metal composite oxide containing Ti and at least one element selected from the group consisting of P, V, Sn, Cu, Ni and Fe. Examples of the metal composite oxide containing Ti and at least one element selected from the group consisting of P, V, Sn, Cu, Ni and Fe include $TiO_2-P_2O_5$, $TiO_2-V_2O_5$, $TiO_2-P_2O_5-SnO_2$, and $TiO_2-P_2O_5-MO$ (M is at least one element selected from the group consisting of Cu, Ni and Fe). These metal composite oxides are converted to lithium-titanium composite oxides by absorbing lithium by charging. Among these lithium-titanium composite oxides, the spinel-type lithium titanate is preferable since it has excellent cycle characteristics.

The negative electrode active material may contain other active material. Examples thereof include carbonaceous materials and metal compounds.

Examples of the carbonaceous materials include natural graphite, artificial graphite, coke, vapor-grown-carbon fiber, mesophase pitch-based carbon fiber, spherical carbon, and resin baked carbon. More preferable carbonaceous materials include the vapor-grown-carbon fiber, the mesophase pitch-based carbon fiber, and the spherical carbon. It is preferable that the carbonaceous material has a layer spacing d002 at a (002) plane of 0.34 nm or less, as determined by X-ray diffraction.

As the metal compound, metal sulfides or metal nitrides may be used. As the metal sulfide, there may be used titanium sulfides such as $TiS_2$, molybdenum sulfides such as $MoS_2$, and iron sulfides such as $FeS$, $FeS_2$ and $LixFeS_2$. As the metal nitride, for example, lithium cobalt nitride (for example, $Li_sCo_tN$ wherein $0 < s < 4$ and $0 < t < 0.5$) may be used.

<Conductive Agent>

Examples of the conductive agent include carbonaceous materials such as acetylene black, carbon, and graphite.

<Binder>

Examples of the binder may include polytetrafluoroethylene (PTFE), polyvinylidene fluoride (PVdF), fluoro-based rubber, and styrene butadiene rubber.

<Negative Electrode Current Collector>

When the negative electrode active material is a material capable of absorbing and releasing lithium ions, as the negative electrode current collector, a material can be used which is electrochemically stable at the potential at which absorption and release of the lithium ions occurs in the negative electrode active material. The negative electrode current collector is preferably a metallic foil made of at least one of copper, nickel, stainless steel, and aluminum, or an alloy foil made of an aluminum alloy containing at least one element selected from Mg, Ti, Zn, Mn, Fe, Cu, and Si.

The negative electrode current collectors having various shapes can be used according to the application of the battery using the negative electrode in this example.

[Production Method]

The negative electrode can be produced, for example, by the following method.

First, a negative electrode active material, a binder, and a conductive agent when required are suspended in a solvent which is generally used, for example, N-methylpyrrolidone, to prepare a slurry for producing the negative electrode.

When the slurry is prepared, the negative electrode active material, the conductive agent, and the binder are preferably formulated at ratios of 68% by mass to 96% by mass, 2% by mass to 16% by mass, and 2% by mass to 16% by mass, respectively. When the amount of the conductive agent is 2% by mass or more, the current collection performance of the negative-electrode-mixture layer can be improved. When the amount of the binder is 2% by mass or more, the binding property of the negative-electrode-mixture layer and the negative electrode current collector can be improved and excellent cycle characteristics can be expected. On the other hand, in order to improve capacity, the content of the conductive agent and binder is preferably 16% by mass or less, respectively.

The slurry obtained as described above is applied onto the negative electrode current collector. By drying and pressing the applied slurry, the negative electrode containing the negative electrode current collector and the negative-electrode-mixture layer formed on the negative electrode current collector can be obtained.

The negative electrodes can be employed, which have various forms according to the requirement of the battery to be produced.

(2) Separator

The separator is not particularly limited as long as it has an insulating property. As the separator, a porous film or nonwoven fabric made of a polymer such as polyolefin, cellulose, polyethylene terephthalate, and vinylone can be used. The materials for the separator may be used alone or as a combination of two or more kinds.

### (3) Electrode Group

The electrode group may have a coiled type structure in which a product obtained by laminating a positive electrode, a separator, and a negative electrode is coiled; a stack type structure in which a plurality of positive electrodes, a plurality of negative electrodes, and separators are laminated while each of the separators sandwiched between each of the positive electrodes and each of the negative electrodes; or other structure.

### (4) Electrolytic Solution

A nonaqueous electrolyte can be used as the electrolytic solution.

The nonaqueous electrolyte contains a nonaqueous solvent and an electrolyte salt dissolved in the nonaqueous solvent. The nonaqueous solvent may contain a polymer.

As the electrolyte salt, there can be used lithium salts such as $LiPF_6$, $LiBF_4$, $Li(CF_3SO_2)_2N$ (lithium bistrifluoromethanesulfonylamide; also known as LiTFSI), $LiCF_3SO_3$ (also known as LiTFS), $Li(C_2F_5SO_2)_2N$ (lithium bispentafluoroethanesulfonylamide; also known as LiBETI), $LiClO_4$, $LiAsF_6$, $LiSbF_6$, lithium bis-oxalatoborate ($LiB(C_2O_4)_2$ (also known as LiBOB)) and lithium difluoro(trifluoro-2-oxide-2-trifluoro-methylpropionate(2-)-0,0) borate ($LiBF_2OCOOC(CF_3)_2$) (also known as $LiBF_2(HHIB)$)). These electrolyte salts may be used alone or as a mixture of two or more kinds. Particularly, preferable examples include $LiPF_6$ and $LiBF_4$.

It is preferable that the electrolyte salt concentration is adjusted to be within a range of 1 to 3 mol/L. By limiting the electrolyte concentration to such a range, the performance when a high load current is applied can be further improved while the influence of the increase in viscosity due to an increase of the electrolyte salt concentration is suppressed.

Although the nonaqueous solvent is not particularly limited, there can be used cyclic carbonates such as propylene carbonate (PC) and ethylene carbonate (EC); chain carbonates such as diethyl carbonate (DEC), dimethyl carbonate (DMC), methylethyl carbonate (MEC), and dipropyl carbonate (DPC); 1,2-dimethoxyethane (DME), $\gamma$-butyrolactone (GBL), tetrahydrofuran (THF), 2-methyltetrahydrofuran (2-MeHF), 1,3-dioxolane, sulforane, and acetonitrile (AN). These solvents may be used alone or as a mixture of two or more kinds. Preferable examples include a nonaqueous solvent containing the cyclic carbonate and/or the chain carbonate.

Alternatively, when lithium ions are not involved in the battery reaction of the battery according to the second embodiment, the electrolytic solution may be an aqueous solution.

### (5) Container

As the container housing the electrode group and the nonaqueous electrolyte, a metal can made of aluminum, an aluminum alloy, iron, and stainless steel or the like, and having a rectangular shape may be used.

Alternatively, an exterior container containing a laminate film can be used as the container, in place of the metal can. As the laminate film, a multilayer film obtained by coating a metal foil with a resin film is preferably used. Polymer materials such as polypropylene (PP), polyethylene (PE), nylon, and polyethylene terephthalate (PET) can be used as the resin. The thickness of the laminate film is preferably 0.2 mm or less.

The shape of the container can be determined by the application of the battery according to the second embodiment. Examples of the shape of the container include a square shape, a cylindrical shape, a flat shape, and a coin shape.

Next, an example of the second embodiment will be described with reference to the drawings.

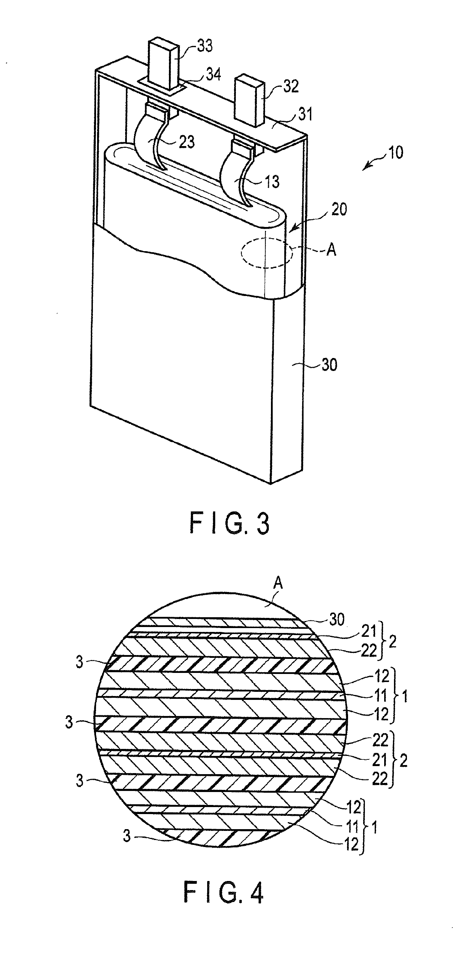

FIG. 3 is a partially broken perspective view of the battery as an example according to the second embodiment. FIG. 4 is an enlarged sectional view of a portion A of the battery of FIG. 3.

A battery 10 shown in FIGS. 3 and 4 includes an electrode group 20 having a coiled-type structure, a nonaqueous electrolyte (not shown) with which the electrode group 20 is impregnated, and a container 30 housing the electrode group 20 and the nonaqueous electrolyte.

The electrode group 20 includes a strip-shaped positive electrode 1, a strip-shaped negative electrode 2, and a strip-shaped separator 3. The separator 3 is sandwiched between the positive electrode 1 and the negative electrode 2. The electrode group 20 having such a coiled type structure can be formed by, for example, laminating the positive electrode 1, the separator 3, and the negative electrode 2 so that the separator 3 is located between the positive electrode 1 and the negative electrode 2 to form a laminated product, spirally coiling the laminated product in a state where the negative electrode 2 is provided outside, and subjecting the coiled product to press molding.

The positive electrode 1 contains a strip-shaped positive electrode current collector 11, and a positive-electrode-mixture layer 12 formed on each surface of the positive electrode current collector 11. A current collecting tab 13 of the positive electrode 1 is provided on a portion of the surface of the positive electrode current collector 11 on which the positive-electrode-mixture layer 12 is not formed.

The negative electrode 2 contains a strip-shaped negative electrode current collector 21, and a negative electrode-mixture-layer 22 formed on a part of the surface of the negative electrode current collector 21. A current collecting tab 23 of the negative electrode 2 is provided on a portion of the surface of the negative electrode current collector 21 on which the negative-electrode-mixture layer 22 is not formed.

The outermost portion of the negative electrode 2 has a structure in which a negative-electrode-mixture layer 22 is formed on one inside surface of a negative electrode current collector 21 as shown in FIG. 4. Other portions of the negative electrodes 2 each have a structure in which a negative-electrode-mixture layer 22 is formed on each surface of a negative electrode current collector 21.

The container 30 housing an electrode group 20 having a coiled-type structure and a nonaqueous electrolyte is a metallic rectangular cylindrical container with a bottom surface. The container 30 has an opening part formed in one end. The opening part is sealed by a sealing plate 31 welded by, for example, laser welding or the like.

A positive electrode terminal 32 is fixed to the sealing plate 31 in a state where the positive electrode terminal 32 is fitted into the sealing plate 31. The positive electrode terminal 32 is electrically connected to the current collecting tab 13 of the positive electrode 1. The current collecting tab 13 of the positive electrode 1 and the positive electrode terminal 32 are connected to each other by, for example, welding such as laser welding.

A negative electrode terminal 33 is fixed to the sealing plate 31 in a state where the negative electrode terminal 33 is fitted into the sealing plate 31 with an insulating gasket 34 sandwiched therebetween. The negative electrode terminal 33 is electrically connected to the current collecting tab 23 of the negative electrode 2. The current collecting tab 23 of the negative electrode 2 and the negative electrode terminal 33 are connected to each other by, for example, welding such as laser welding.

Although not shown, the sealing plate 31 includes an electrolytic solution inlet. The nonaqueous electrolyte can be injected into the container 30 through the electrolytic solution inlet included in the sealing plate 31.

The battery according to the second embodiment can contain the positive electrode 1 described with reference to FIG. 2. The battery according to the second embodiment can contain the negative electrode 2 having the same structure as that of the positive electrode 1 described with reference to FIG. 2.

Hereinafter, an example of the electrode group that can be included in the battery according to the second embodiment will be described with reference to the drawings.

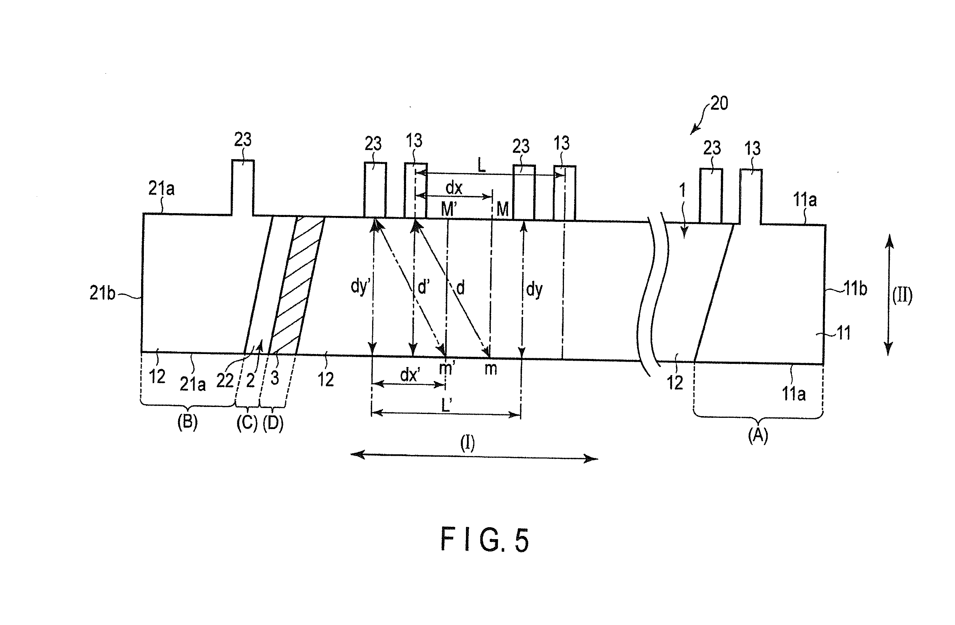

FIG. 5 is a partially broken developed view schematically showing the electrode group having a coiled structure as an example of that which may be included in the battery according to the second embodiment.

The electrode group 20 shown in FIG. 5 contains the positive electrode 1, the negative electrode 2, and the separator 3 provided between the positive electrode 1 and the negative electrode 2. In one end part (A) shown on the right side of FIG. 5, the positive electrode current collector 11 is shown in a state where one positive-electrode-mixture layer 12 located on the outermost surface of the electrode group 20 is omitted. In the other end part (B) shown on the left side of FIG. 5, the negative electrode current collector 21 is shown in a state where the positive electrode 1, the separator 3, and one negative-electrode-mixture layer 22 are omitted. In a portion (C) adjacent to the right side of the end part (B) shown on the left side of FIG. 5, the negative electrode 2 is shown in a state where the positive electrode 1 and separator 3 of the electrode group 20 are omitted. Furthermore, in a portion (D) adjacent to the right side of the portion (C), the separator 3 is shown in a state where the positive electrode 1 is omitted.

The positive electrode 1 is a positive electrode having the structure shown in FIG. 2. That is, the positive electrode 1 satisfies the relationship: $1.1 \leq dy/dx \leq 2.0$.

The negative electrode 2 has the same structure as that of the positive electrode 1.

That is, the negative electrode 2 extends in a first direction (I) as in the positive electrode 1, and has a strip shape. The negative electrode 2 includes the negative electrode current collector 21 and the negative-electrode-mixture layer 22 formed on the negative electrode current collector 21. The negative electrode current collector 21 has a pair of long sides 21a, and a pair of short sides 21b. The negative electrode current collector 21 includes a plurality of current collecting tabs 23 of the negative electrode 2. Each of the plurality of current collecting tabs 23 extends from one long side of the pair of long sides 21a of the negative electrode current collector 21.

Furthermore, in the negative electrode 2, a length of a half of a distance L' in the first direction (I) between a middle point of one current collecting tab 23 among the plurality of current collecting tabs 23 and a middle point of another current collecting tab 23 adjacent to the one current collecting tab 23 is dx'. Here, each of the middle point is the middle point of the width of each of the current collecting tabs 23 in the direction parallel to the direction (I) of the long side 21a of the negative electrode current collector 21. A width of the negative-electrode-mixture layer 22 in a direction perpendicular to a direction of the long side 21a of the negative electrode current collector 21 is dy'. The length dx' and the width dy' satisfy the relationship: $1.1 \leq dy'/dx' \leq 2.0$.

The positive electrode 1 and the negative electrode 2 are laminated with the separator 3 sandwiched therebetween so that the current collecting tab 13 of the positive electrode 1 and the current collecting tab 23 of the negative electrode 2 do not overlap with each other. The distance between the current collecting tab 13 of the positive electrode 1 and the current collecting tab 23 of the negative electrode 2 may correspond to a distance between the positive electrode terminal 32 and the negative electrode terminal 33 fixed to the sealing plate 31, and is not particularly limited.

The electrode group 20 shown in FIG. 5 can be coiled around an axis extending in a second direction (II). The electrode group 20 can be coiled so that the plurality of the current collecting tabs 13 of the positive electrode 1 overlap with each other and the plurality of the current collecting tabs 23 of the negative electrode 2 overlap with each other.

In the battery 10 including such an electrode group 20, a distance between the positive electrode active material located at a position m farthest from the current collecting tab 13 and the current collecting tab 13 can be shortened. Similarly, in the battery 10, a distance in a second direction (II) of the negative active material located at a position m' from the current collecting tab 23 can be shortened. Here, the position m' is a position farthest from the current collecting tab 23. Specifically, the position m' is a position on the long side 21a from which the current collecting tab 23 does not extend. The position m' is also separated by a width dy' in the second direction (II) from a position M'. The position M' is separated by a length dx' in the first direction (I) from the current collecting tab 23. Therefore, in such a battery 10, the moving distance of an electron can be shortened. As a result, a resistance value can be lowered. Therefore, the battery 10 can exhibit more excellent input-output characteristics.

Furthermore, the battery 10 has more excellent cost-effectiveness for an improvement in the input-output characteristics.

According to the second embodiment described above, the battery is provided. Since the battery contains the positive electrode according to the first embodiment, the battery can have excellent input-output characteristics.

[Examples]

The present invention will be more particularly described with reference to examples below. However, the present invention is not limited to these examples, without departing from the spirit of the present invention.

(Example 1)

1. Production of Nonaqueous Electrolyte Battery 10

In example 1, a square nonaqueous electrolyte battery 10 shown in FIGS. 3, 4, and 5 was produced as follows.

[Preparation of Slurry for Producing Positive Electrode]

Lithium manganese oxide $LiMn_2O_4$ (average grain size: 13.5 $\mu$m) and lithium cobalt oxide $LiCoO_2$ (average grain size: 6.1 $\mu$m) as a positive electrode active material, acetylene black as a conductive agent, and polyvinylidene fluoride PVdF as a binder were suspended in N-methylpyrrolidone, to obtain a slurry for producing a positive electrode. The mass ratios of the lithium manganese oxide, lithium cobalt oxide, acetylene black, and PVdF put into N-methylpyrrolidone were 70% by mass, 20% by mass, 7% by mass, and 3% by mass, respectively.

The slurry for producing a positive electrode was dispersed by using RENTARO (ARE-250) manufactured by THINKY as a rotation and revolution mixer. The dispersion conditions were as follows: rotation speed: 2000 rpm, rotation time: 5 min, bead diameter: $\varphi$2 (zirconia bead), and bead filling amount: 80%.

[Production of Positive Electrode 1]

An aluminum foil having a thickness of 15 $\mu$m was provide as a positive electrode current collector 11. The positive electrode current collector 11 extended in a first direction (I), and had a strip shape having a width in a second direction (II) perpendicular to the first direction (I).

The slurry for producing a positive electrode prepared as described above was applied onto each surface of the positive electrode current collector 11 while being adjusted so that an electrode-weight per unit area was 65 g/m$^2$. When the slurry was applied, a slurry non-applied part extending in the first direction (I) and having a strip shape was left on a part of the surface of the positive electrode current collector 11. Next, the positive electrode current collector 11 onto which the slurry was applied was dried.

After drying, the slurry applied part of the positive electrode current collector 11 was cut to a width of 75 mm. After cutting, the slurry non-applied part was punched out to provide 30 current collecting tabs 13 extending from a long side 11a of the positive electrode current collector 11, the long side 11a extending in first direction (I) of the positive electrode current collector 11. For the distance between the two current collecting tabs 13 of the positive electrode 1, the distance between the current collecting tab 13 closest to one end part and the current collecting tab 13 adjacent thereto was set to 95 mm. The subsequent distances were enlarged by 0.95 mm toward the other end part. That is, the distance between the two current collecting tabs 13 was set to 95 mm, 95.95(95 + 0.95 x 1) mm, 96.9(95 + 0.95 x 2) mm, ..., 122.55(95 + 0.95 x 29) mm. The distance between one end part of the positive electrode current collector 11 and the current collecting tab 13 closest thereto was set to 30 mm. The distance between the other end part and the current collecting tab 13 closest thereto was set to 50 mm.

A ratio (dy/dx) of a width dy of the slurry applied part of the positive electrode current collector 11, that is, 75 mm to a length dx of a half of a distance L between the current collecting tabs 13 adjacent to each other was 1.22 to 1.58.

Then, the punched positive electrode current collector 11 was pressed with a press load of 60 N. Thereby, a positive electrode 1 was produced, which contained the positive electrode current collector 11 and a positive-electrode-mixture layer 12 formed on the positive electrode current collector 11 and had the 30 current collecting tabs 13 extending from the positive electrode current collector 11.

[Preparation of Slurry for Producing Negative Electrode]

Spinel-type lithium titanate $Li_4Ti_5O_{12}$ as a negative electrode active material and PVdF as a binder were suspended in N-methylpyrrolidone, to obtain a slurry for producing a negative electrode. The mass ratios of the lithium titanate and PVdF poured into N-methylpyrrolidone were 95% by mass and 5% by mass, respectively.

[Production of Negative Electrode 2]

An aluminum foil having a thickness of 15 $\mu$m was prepared as a negative electrode current collector 21. The negative electrode current collector 21 extended in a first direction (I), and had a strip shape having a width in a second direction (II) orthogonal to the first direction.

The slurry for producing a negative electrode prepared as described above was applied onto each surface of the negative electrode current collector 21 while being adjusted so that an electrode-weight per unit area was 35 g/m$^2$. When the slurry was applied, a slurry non-applied part extending in the first direction (I) and having a strip shape was left on a part of the surface of the negative electrode current collector 21. Next, the negative electrode current collector 21 onto which the slurry was applied was dried.

After drying, the slurry applied part of the negative electrode current collector 21 was cut to a width of 78 mm, and the slurry non-applied part was cut to a width of 28.5 mm. After cutting, the slurry non-applied part was punched out to provide 31 current collecting tabs 23 extending from a long side 21a of the negative electrode current collector 21, the long side 21a extending in the first direction (I) of the negative electrode current collector 21. For the distance between the two current collecting tabs 23, the distance between the current collecting tab 23 closest to one end part and the current collecting tab 23 adjacent thereto was set to 95 mm. The subsequent distances were enlarged by 0.96 mm toward the other end part. That is, the distance between the two current collecting tabs 23 was set to 95 mm, 95.96(95 + 0.96 x 1) mm, 96.92(95 + 0.96 x 2) mm, ..., 123.8(95 + 0.96 x 30) mm. The distance between one end part of the negative electrode current collector 21 and the current collecting tab 23 closest thereto was 5 mm. The distance between the other end part and the current collecting tab 23 closest thereto was set to 50 mm.

Then, the punched negative electrode current collector 21 was pressed, to obtain a negative-electrode-mixture layer 22 having a density of 2.3 g/cm$^3$. Therefore, a negative electrode 2 was produced, which contained the negative electrode current collector 21 and the negative-electrode-mixture layer 22 formed on the negative electrode current collector 21 and had the 31 current collecting tabs 23 extending from the negative electrode current collector 21.

[Production of Electrode Group 20]

The positive electrode 1 and the negative electrode 2 produced as described above were superposed with a separator 3 provided therebetween. As the separator 3, a separator having a thickness of 20 $\mu$m and a width of 85 mm and made of cellulose was used. The 30 current collecting tabs 13 of the positive electrode 1 and the 31 current collecting tabs 23 of the negative electrode 2 were laminated during superposing so that each of the current collecting tabs 13 of the positive electrode 1 and each of the current collecting tabs 23 of the negative electrode 2 were adjacent to each other, but did not overlap with each other. The laminated product thus obtained was coiled around an axis extending in the width direction of the positive electrode current collector 11 and the negative electrode current collector 21. In this case, the laminated product was coiled so that the 30 current collecting tabs 13 of the positive electrode 1 overlapped with each other, and the 31 current collecting tabs 23 of the negative electrode 2 overlapped with each other.

The positive electrode 1, negative electrode 2, and separator 3 coiled as described above were subjected to a heat press at 80°C, and fixed with an insulating tape. Therefore, a coiled type electrode group 20 was obtained, which included the positive electrode 1, the negative electrode 2, and the separator 3 provided between the positive electrode 1 and the negative electrode 2.

[Assembly of Battery 10]

The electrode group 20 obtained as described above was housed in a square container 30 with a bottom surface. The container 30 had an opening part and was made of aluminum. In this case, the current collecting tab 13 of the positive electrode 1 and the current collecting tab 23 of the negative electrode 2 extended from the end face of the electrode group 20 facing the opening part.

Next, a rectangular sealing plate 31 made of aluminum was provided. The sealing plate 31 had three opening parts (not shown). A positive electrode terminal 32 with a column shape was fitted into and fixed to one of the three opening parts. A negative electrode terminal 33 with a column shape was fitted into and fixed to the other one of the three opening parts with an insulating gasket 34 sandwiched therebetween. The last one of the three opening parts was an electrolytic solution inlet for injecting a nonaqueous electrolyte.

Next, one end of the positive electrode terminal 32 and the current collecting tabs 13 of the electrode group 20 were electrically connected by laser welding. Similarly, one end of the negative electrode terminal 33 and the current collecting tabs 23 of the electrode group 20 were electrically connected by laser welding.

Next, the peripheral part of the sealing plate 31 was welded to the container 30 so that the opening part of the container 30 was closed.

Next, a nonaqueous electrolyte was prepared. The nonaqueous electrolyte was prepared by dissolving lithium hexafluorophosphate $LiPF_6$ at a concentration of 1.0 mol/L and lithium tetrafluoroborate ($LiBF_4$) at a concentration of 0.5 mol/L in a nonaqueous solvent prepared by mixing propylene carbonate (PC) and diethyl carbonate (DEC) at a volume ratio of 1 : 1.

Next, the nonaqueous electrolyte prepared as described above was injected into the container 30 through the electrolytic solution inlet formed in the sealing plate 31. Next, a sealing lid was weld to the peripheral part of the electrolytic solution inlet. Thus, a battery 10 was assembled.

[Measurement of Pore Size Diameter Distribution]

The pore size diameter distribution of the positive electrode 1 of example 1 was measured by a method described below.

Shimadzu Auto pore type 9520 was used as a measuring apparatus. Samples were prepared by cutting the positive electrode into small pieces each sized at about 25 x 25 mm$^2$, and the samples thus prepared were folded and put in a measuring cell, and the pore size diameter distribution of the positive electrode was measured under a condition of an initial pressure of 20 kPa (about 3 psia, corresponding to the pore size diameter of about 60 $\mu$m). The average value of the three samples was used as a measurement result. In the data analysis, the specific surface area of the pores was calculated under the assumption that the pore was shaped cylindrical. When the apex of a peak existed in the pore size diameter of a log differential intrusion distribution curve of 0.03 $\mu$m to 0.2 $\mu$m, the peak was determined to be present in the range.

The analytical principle of a mercury intrusion method is based on Washburn's formula (B):

$$D = -4\gamma cos\theta/P \qquad formula\ (B)$$

wherein P denotes the applied pressure, D denotes the diameter of the pore, $\gamma$ denotes the surface tension of mercury (480 dyne·cm$^{-1}$), and $\theta$ denotes the contact angle between mercury and the wall of the pore, which was 140 degrees. Since $\gamma$ and $\theta$ are constants, it is possible to obtain a relationship between the applied pressure P and the pore size diameter D from Washburn's formula, and the pore size diameter and the pore volume distribution can be obtained by measuring the volume of the mercury entering the pores. The details of the measuring method and principle or the like are described in "Biryushi Handbook (Fine Particle Handbook)" by Motoji Jinpo et al., published by Asakura shoten K.K. in 1991 and "Huntaibussei Sokuteihou (Method of Measuring Properties of Powdery Material)" by Sohachiro Hayakawa, published by Asakura shoten K.K. in 1978.

The pore size diameter distribution showed that a pore size diameter $D_1$ of pores having the highest abundance ratio was 0.07 $\mu$m, and a pore size diameter $D_2$ of pores having the second highest abundance ratio was 0.09 $\mu$m. The pore size diameter distribution showed that a ratio (log $V(D_1)$/log V ($D_2$)) of the logarithm log $V(D_1)$ of the total volume of pores having a pore size diameter of 0.07 $\mu$m to the logarithm log V ($D_2$) of the total volume of pores having a pore size diameter of 0.09 $\mu$m was 4.03.

This measurement showed that the above pore size diameter distribution was obtained by producing the positive electrode 1 under the following conditions.

•Positive electrode active material: lithium manganese oxide $LiMn_2O_4$ having an average grain size of 13.5 $\mu$m and lithium cobalt oxide $LiCoO_2$ having an average grain size of 6.1 $\mu$m;
•Conductive agent: acetylene black;
•Binder: polyvinylidene fluoride PVdF;
•Solvent: N-methylpyrrolidone;
•Mixing ratio: (lithium manganese oxide) 70% by mass;
(lithium cobalt oxide) 20% by mass; (conductive agent) 7% by mass; (binder) 3% by mass;
•Dispersing device: New Visco Mill manufactured by Imex Co., Ltd. (NVM-2);
•Dispersion conditions: rotation number: 2000 rpm; rotation time: 5 min; bead diameter: $\phi$2 (zirconia bead); bead filling amount: 80%;
•Press load: 60N.

[Measurement of Charge Capacity Ratio]

The battery 10 of example 1 was subjected to 1C charge and 10C charge under a 25°C environment, to measure a 10C charge capacity rate. The 10C charge rate of the battery 10 of example 1 was 99%. Herein, a charge capacity obtained by carrying out a 1C constant current voltage charge of the battery 10 subjected to a 1C constant current discharge to 1.5 V was defined as a 1C charge amount. A charge amount obtained by carrying out a 10C constant current voltage charge was defined as a 10C charge capacity. A ratio of the 10C charge capacity to the 1C charge capacity (10C charge capacity/1C charge capacity) was defined as a 10C charge capacity ratio.

(Examples 2 to 13)

In examples 2 to 13, batteries 10 were produced and evaluated according to the same method as that of example 1 except that the dispersion conditions of a slurry for producing a positive electrode and the press conditions of the positive electrode 1 were varied to conditions shown in Table 1.

(Examples 14 to 17)

In examples 14 to 17, batteries 10 were produced and evaluated according to the same method as that of example 12 except that a ratio (dy/dx) of a width dy of the slurry applied part of the positive electrode current collector 11 to a length dx of a half of the average of the distances L between the current collecting tabs 13 of the positive electrode 1 adjacent to each other was varied as shown in Table 2.

(Example 18)

In example 18, a battery 10 was produced and evaluated according to the same method as that of example 12 except that a negative electrode active material was changed to graphite.

(Comparative Examples 1 to 16)

In comparative examples 1 to 16, batteries 10 were produced and evaluated according to the same method as that of example 1 except that the dispersion conditions of a slurry for producing a positive electrode and the press conditions of the positive electrode 1 were changed to conditions shown in Table 1.

Table 1

|  |  | Dispersion Conditions Rotation Number / Rotation time / Bead Diameter | Press Load |
|---|---|---|---|
|  | Example 1 | 2000rpm/5min/2.0mm | 70kN |
|  | Example 2 | 2000rpm/7min/2.0mm | 60kN |
|  | Example 3 | 1600rpm/7min/1.5mm | 60kN |
|  | Example 4 | 1200rpm/16min/2.0mm | 40kN |
|  | Example 5 | 1200rpm/16min/3.5mm | 40kN |
|  | Example 6 | 1400rpm/13min/3.5mm | 40kN |
|  | Example 7 | 1800rpm/10min/2.0mm | 50kN |

(continued)

| | Dispersion Conditions Rotation Number / Rotation time / Bead Diameter | Press Load |
|---|---|---|
| Example 8 | 1600rpm/10min/2.0mm | 50kN |
| Example 9 | 1800rpm/10min/3.5mm | 60kN |
| Example 10 | 1400rpm/9min/3.5mm | 60kN |
| Example 11 | 1400rpm/10min/3.0mm | 60kN |
| Example 12 | 1400rpm/9min/2.0mm | 60kN |
| Example 13 | 1600rpm/10min/2.0mm | 60kN |
| Example 14 | 1400rpm/9min/2.0mm | 60kN |
| Example 15 | 1400rpm/9min/2.0mm | 60kN |
| Example 16 | 1400rpm/9min/2.0mm | 60kN |
| Example 17 | 1400rpm/9min/2.0mm | 60kN |
| Example 18 | 1400rpm/9min/2.0mm | 60kN |
| Comparative Example 1 | 1800rpm/5min/2.0mm | 70kN |
| Comparative Example 2 | 1400rpm/9min/4.0mm | 60kN |
| Comparative Example 3 | 2000rpm/5min/2.0mm | 50kN |
| Comparative Example 4 | 1800rpm/10min/3.5mm | 40kN |
| Comparative Example 5 | 1800rpm/5min/3.0mm | 60kN |
| Comparative Example 6 | 1600rpm/16min/3.5mm | 50kN |
| Comparative Example 7 | 1600rpm/5min/3.0mm | 50kN |
| Comparative Example 8 | 1800rpm/14min/2.0mm | 40kN |
| Comparative Example 9 | 1800rpm/5min/2.0mm | 50kN |
| Comparative Example 10 | 1800rpm/9min/2.0mm | 50kN |
| Comparative Example 11 | 1800rpm/5min/2.0mm | 60kN |
| Comparative Example 12 | 1400rpm/5min/1.5mm | 40kN |
| Comparative Example 13 | 1200rpm/5min/1.5mm | 40kN |
| Comparative Example 14 | 1600rpm/6min/1.0mm | 60kN |
| Comparative Example 15 | 1400rpm/10min/1.0mm | 60kN |
| Comparative Example 16 | 1600rpm/6min/2.0mm | 60kN |

[Results]

The pore size diameter $D_1$ of the pores having the highest abundance ratio, the pore size diameter $D_2$ of the pores having the second highest abundance ratio, $D_1/D_2$, and a ratio (log $V(D_1)$/log $V(D_2)$) of the logarithm log$V(D_1)$ of the total volume of pores having a pore size diameter of $D_1$ to the logarithm log $V(D_2)$ of the total volume of pores having a pore size diameter of $D_2$ are shown in Table 2. The pore size diameter $D_1$, the pore size diameter $D_2$, $D_1/D_2$, and the ratio (log $V(D_1)$/log $V(D_2)$) are obtained from the pore size diameter distribution of the positive electrode 1 of each of examples and comparative examples. Also, the 10C charge capacity ratios of the batteries 10 of examples and comparative examples are shown in Table 2.

Table 2

| | $D_1$ ($\mu$m) | $D_2$ ($\mu$m) | $D_1/D_2$ | Log V($D_1$)/log V($D_2$) | $dn_y/dn_x$ | Negative Active Material | 10C Charge Ratio (%) |
|---|---|---|---|---|---|---|---|
| Example 1 | 0.07 | 0.90 | 0.08 | 4.03 | 1.22-1.58 | $Li_4Ti_5O_{12}$ | 99 |
| Example 2 | 0.19 | 0.28 | 0.68 | 4.63 | 1.22-1.58 | $Li_4Ti_5O_{12}$ | 85 |
| Example 3 | 0.15 | 1.10 | 0.14 | 3.43 | 1.22-1.58 | $Li_4Ti_5O_{12}$ | 86 |
| Example 4 | 0.80 | 6.22 | 0.13 | 3.11 | 1.22-1.58 | $Li_4Ti_5O_{12}$ | 83 |
| Example 5 | 0.95 | 6.51 | 0.15 | 3.88 | 1.22-1.58 | $Li_4Ti_5O_{12}$ | 83 |
| Example 6 | 0.98 | 1.53 | 0.64 | 4.33 | 1.22-1.58 | $Li_4Ti_5O_{12}$ | 86 |
| Example 7 | 0.23 | 0.50 | 0.46 | 2.15 | 1.22-1.58 | $Li_4Ti_5O_{12}$ | 93 |
| Example 8 | 0.33 | 0.92 | 0.36 | 4.50 | 1.22-1.58 | $Li_4Ti_5O_{12}$ | 85 |
| Example 9 | 0.25 | 2.86 | 0.09 | 3.17 | 1.22-1.58 | $Li_4Ti_5O_{12}$ | 94 |
| Example 10 | 0.36 | 0.53 | 0.68 | 4.75 | 1.22-1.58 | $Li_4Ti_5O_{12}$ | 85 |
| Example 11 | 0.31 | 2.14 | 0.14 | 3.29 | 1.22-1.58 | $Li_4Ti_5O_{12}$ | 90 |
| Example 12 | 0.47 | 3.80 | 0.12 | 4.33 | 1.22-1.58 | $Li_4Ti_5O_{12}$ | 95 |
| Example 13 | 0.52 | 1.48 | 0.35 | 3.75 | 1.22-1.58 | $Li_4Ti_5O_{12}$ | 92 |
| Example 14 | 0.47 | 3.80 | 0.12 | 4.33 | 1.72-1.84 | $Li_4Ti_5O_{12}$ | 98 |
| Example 15 | 0.47 | 3.80 | 0.12 | 4.33 | 2.08-2.52 | $Li_4Ti_5O_{12}$ | 98 |
| Example 16 | 0.47 | 3.80 | 0.12 | 4.33 | 0.76-1.01 | $Li_4Ti_5O_{12}$ | 83 |
| Example 17 | 0.47 | 3.80 | 0.12 | 4.33 | 0.43-0.65 | $Li_4Ti_5O_{12}$ | 72 |
| Example 18 | 0.47 | 3.80 | 0.12 | 4.33 | 1.22-1.58 | Graphite | 77 |
| Comparative Example 1 | 0.05 | 2.12 | 0.02 | 4.50 | 1.22-1.58 | $Li_4Ti_5O_{12}$ | 54 |
| Comparative Example 2 | 0.57 | 0.69 | 0.83 | 3.75 | 1.22-1.58 | $Li_4Ti_5O_{12}$ | 50 |
| Comparative Example 3 | 0.12 | 4.13 | 0.03 | 3.33 | 1.22-1.58 | $Li_4Ti_5O_{12}$ | 53 |
| Comparative Example 4 | 0.62 | 0.71 | 0.87 | 4.20 | 1.22-1.58 | $Li_4Ti_5O_{12}$ | 51 |
| Comparative Example 5 | 0.11 | 3.27 | 0.03 | 3.20 | 1.22-1.58 | $Li_4Ti_5O_{12}$ | 53 |
| Comparative Example 6 | 0.80 | 0.92 | 0.87 | 4.25 | 1.22-1.58 | $Li_4Ti_5O_{12}$ | 49 |
| Comparative Example 7 | 0.07 | 5.11 | 0.01 | 3.67 | 1.22-1.58 | $Li_4Ti_5O_{12}$ | 53 |
| Comparative Example 8 | 0.75 | 0.90 | 0.83 | 3.60 | 1.22-1.58 | $Li_4Ti_5O_{12}$ | 48 |
| Comparative Example 9 | 0.24 | 1.58 | 0.15 | 10.14 | 1.22-1.58 | $Li_4Ti_5O_{12}$ | 58 |
| Comparative Example 10 | 0.50 | 0.85 | 0.59 | 6.27 | 1.22-1.58 | $Li_4Ti_5O_{12}$ | 61 |
| Comparative Example 11 | 0.31 | 2.97 | 0.10 | 7.33 | 1.22-1.58 | $Li_4Ti_5O_{12}$ | 60 |

(continued)

|  | $D_1$ (μm) | $D_2$ (μm) | $D_1/D_2$ | Log V($D_1$)/log V($D_2$) | $dn_y/dn_x$ | Negative Active Material | 10C Charge Ratio (%) |
|---|---|---|---|---|---|---|---|
| Comparative Example 12 | 0.66 | 0.97 | 0.68 | 14.76 | 1.22-1.58 | $Li_4Ti_5O_{12}$ | 53 |
| Comparative Example 13 | 0.62 | 2.45 | 0.25 | 8.00 | 1.22-1.58 | $Li_4Ti_5O_{12}$ | 56 |
| Comparative Example 14 | 0.23 | 2.38 | 0.10 | 1.36 | 1.22-1.58 | $Li_4Ti_5O_{12}$ | 57 |
| Comparative Example 15 | 0.21 | 2.68 | 0.08 | 0.94 | 1.22-1.58 | $Li_4Ti_5O_{12}$ | 59 |
| Comparative Example 16 | 0.45 | 0.88 | 0.51 | 11.00 | 1.22-1.58 | $Li_4Ti_5O_{12}$ | 55 |

The comparison of the results of examples 1 to 18 with the results of comparative examples 1 to 16 shows that the 10C charge capacity ratios of the batteries 10 of examples 1 to 18 are higher than those of the batteries of comparative examples 1 to 16, that is, the batteries 10 of examples 1 to 18 have excellent input characteristics than those of comparative examples 1 to 16. The reason for this is as follows. The pore size diameter $D_1$ of the pores having the highest abundance ratio and the pore size diameter $D_2$ of the pores having the second highest abundance ratio satisfied the relationship: $0.03 < D_1/D_2 < 0.8$ in the positive-electrode-mixture layer 12 of examples 1 to 18, and the logarithm log V($D_1$) of the total volume of the pores having the pore size diameter $D_1$ and the logarithm log V($D_2$) of the total volume of the pores having the pore size diameter $D_2$ satisfy $2 < \log V(D_1)/\log V(D_2) < 6$. Thanks to these, the permeability of the electrolytic solution into the positive-electrode-mixture layer 12 could be improved, and sufficient conductivity between the positive electrode active materials in the positive-electrode-mixture layer 12 could also be obtained. On the other hand, the batteries of comparative examples 1 to 16 did not satisfy any one of the two relationships in the positive-electrode-mixture layer 12. Due to this, the batteries of the comparative examples 1 to 16 had low conductivity between the positive electrode active materials in the positive-electrode-mixture layer 12 or low permeability of the electrolytic solution into the positive-electrode-mixture layer 12.

A comparison of the result of example 12 with the result of example 18 shows that the 10C charge capacity ratios of the batteries 10 of examples 1 to 17 using lithium titanate as the negative electrode active material are higher than those of example 18 using graphite as the negative electrode active material, that is, the batteries 10 of examples 1 to 17 have more excellent input characteristics than those of example 18.

A comparison of the results of example 12 and examples 14 to 17 shows that the 10C charge capacity ratios of the batteries 10 of examples 12, 14, and 15 in which the ratio (dy/dx) of the width dy of the slurry applied part of the positive electrode current collector 11 to the length dx of the half L of the distance between the current collecting tabs 13 adjacent to each other is 1.1 or more are higher than those of the batteries 10 of examples 16 and 17 in which dy/dx is less than 1.1, that is, the batteries 10 of examples 12, 14, and 15 have excellent input characteristics. This is because the ratio of the width dy of the slurry applied part to the length dx of the half of the distance L between the current collecting tabs 13 in the batteries 10 of examples 16 and 17 is smaller than that in the batteries 10 of examples 12 to 15, that is, the moving distance of an electron to the current collecting tab 13 in the positive-electrode-mixture layer 12 in the batteries 10 of examples 16 and 17 is more than that in the batteries 10 of examples 12 to 15, and the resistance value in the batteries 10 of examples 16 and 17 is more than that in the batteries 10 of examples 12 to 15.

A comparison of the results of examples 1 to 12 show that the 10C charge capacity ratios in examples 1 to 3 and examples 6 to 12 in which the pore size diameter $D_1$ of the pores having the highest abundance ratio is within a range of 0.23 to 0.6 μm, and/or the pore size diameter $D_2$ of the pores having the second highest abundance ratio is within a range of 0.25 to 6 μm are higher than those in examples 4 and 5 in which the pore size diameter $D_1$ is outside a range of 0.23 to 0.6 μm, and the pore size diameter $D_2$ is outside a range of 0.25 to 6 μm, that is, examples 1 to 3 and examples 6 to 12 have more excellent input characteristics than those of examples 4 and 5.

According to at least one embodiment and example described above, the positive electrode is provided. The positive electrode satisfies the relationship: $0.03 < D_1/D_2 < 0.8$ and the relationship: $2 < \log V(D_1)/\log V(D_2) < 6$. In the positive electrode, the positive-electrode-mixture layer can have a filling density capable of permitting sufficient permeation of the electrolytic solution into the positive-electrode-mixture layer and can have a distance between the positive electrode active materials that enables sufficient conductivity between the positive electrode active materials in the positive-electrode-mixture layer. Therefore, the positive electrode can realize a battery having excellent input-output characteristics.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1.  A positive electrode (1) comprising:

    a positive electrode current collector (11); and
    a positive-electrode-mixture layer (12) which is formed on the positive electrode current collector (11) and comprises a positive electrode active material,
    wherein the positive-electrode-mixture layer (12) comprises first pores and second pores, the first pores having a highest abundance ratio in a pore size diameter distribution obtained by a mercury intrusion method and having a pore size diameter of $D_1$, the second pores having a second highest abundance ratio in the pore size diameter distribution and having a pore size diameter of $D_2$;
    the pore size diameter $D_1$ and the pore size diameter $D_2$ satisfy a following relationship: $0.03 < D_1/D_2 < 0.8$; and
    a total volume $V(D_1)$ of the first pores and a total volume $V(D_2)$ of the second pores obtained from the pore size diameter distribution satisfy a following relationship: $2 < \log V(D_1)/\log V(D_2) < 6$.

2.  The positive electrode (1) according to claim 1, wherein the pore size diameter $D_1$ is within a range of 0.23 $\mu$m to 0.6 $\mu$m, and the pore size diameter $D_2$ is within a range of 0.25 $\mu$m to 6 $\mu$m.

3.  The positive electrode (1) according to claim 1 or 2, wherein the positive electrode current collector (11) is in a strip shape comprising a pair of long sides (11a);
    the positive electrode current collector (11) comprises a plurality of current collecting tabs (13) of the positive electrode (1);
    each of the plurality of current collecting tabs (13) of the positive electrode (1) extends from at least one of the pair of long sides (11a) of the positive electrode current collector (11);
    a length of a half of a distance L between a middle point of a first tab among the plurality of current collecting tabs (13) of the positive electrode (1) and a middle point of a second tab adjacent to the first tab is dx, the middle point of the first tab being a middle point of a width of the first tab in a direction parallel to a direction (I) of the long side (11a) of the positive electrode current collector (11), and the middle point of the second tab being a middle point of a width of the second tab in the direction parallel to the direction (I) of the long side (11a) of the positive electrode current collector (11);
    a width of the positive-electrode-mixture layer (12) in a direction (II) perpendicular to the direction (I) of the long side (11a) of the positive electrode current collector (11) is dy, and
    the length dx and the width dy satisfy a relationship: $1.1 \leq dy/dx \leq 2.0$.

4.  A battery (10) comprising:

    the positive electrode (1) according to any one of the preceding claims; and
    a negative electrode (2).

5.  The battery (10) according to claim 4, wherein the negative electrode (2) comprises a negative electrode active material capable of absorbing and releasing lithium ions at a potential of 0.4 V (vs. Li/Li$^+$) or more.

6.  The battery (10) according to claim 4 or 5, further comprising a separator (3) provided between the positive electrode (1) and the negative electrode (2),
    wherein the positive electrode current collector (11) is in a strip shape comprising a pair of long sides (11a);
    the positive electrode current collector (11) comprises a plurality of current collecting tabs (13) of the positive electrode (1);
    each of the plurality of current collecting tabs (13) of the positive electrode (1) extends from at least one of the pair of long sides (11a) of the positive electrode current collector (11),

a length of a half of a distance L between a middle point of a first tab among the plurality of current collecting tabs (13) of the positive electrode (1) and a middle point of a second tab adjacent to the first tab is dx, the middle point of the first tab being a middle point of a width of the first tab in a direction parallel to a direction (I) of the long side (11a) of the positive electrode current collector (11), and the middle point of the second tab is a middle point of a width of the second tab in the direction parallel to the direction (I) of the long side (11a) of the positive electrode current collector (11),

a width of the positive-electrode-mixture layer (12) in a direction (II) perpendicular to the direction (I) of the long side (11a) of the positive electrode current collector (11) is dy, and

the length dx and the width dy satisfy a relationship: $1.1 \leq dy/dx \leq 2.0$.

F I G. 1

FIG. 2

F I G. 3

F I G. 4

F I G. 5

EP 2 779 282 A1

Europäisches
Patentamt

European
Patent Office

Office européen
des brevets

# EUROPEAN SEARCH REPORT

Application Number

EP 14 15 7840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/169997 A1 (SARUWATARI HIDESATO [JP] ET AL) 2 July 2009 (2009-07-02) | 1,4,5 | INV. H01M4/131 |
| Y | * claims 1-7 * | 2,3,6 | |
| Y | US 2008/241692 A1 (SARUWATARI HIDESATO [JP] ET AL) 2 October 2008 (2008-10-02) * claims 1-13 * | 1-6 | |
| Y | US 2012/270093 A1 (ISOZAKI YOSHIYUKI [JP] ET AL) 25 October 2012 (2012-10-25) * paragraph [0053] - paragraph [0074] * * paragraph [0130]; claims 1-10; examples 1-9 * | 1-6 | |

TECHNICAL FIELDS
SEARCHED        (IPC)

H01M

The present search report has been drawn up for all claims

| Place of search | Date of completion of the search | Examiner |
|---|---|---|
| Munich | 7 July 2014 | Wiedemann, Eric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 15 7840

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2014

| Patent document cited in search report | | Publication date | Patent family member(s) | | Publication date |
|---|---|---|---|---|---|
| US 2009169997 | A1 | 02-07-2009 | JP | 5430849 B2 | 05-03-2014 |
| | | | JP | 2009158396 A | 16-07-2009 |
| | | | US | 2009169997 A1 | 02-07-2009 |
| | | | US | 2013078531 A1 | 28-03-2013 |
| US 2008241692 | A1 | 02-10-2008 | JP | 4364250 B2 | 11-11-2009 |
| | | | JP | 2008243729 A | 09-10-2008 |
| | | | US | 2008241692 A1 | 02-10-2008 |
| | | | US | 2013084497 A1 | 04-04-2013 |
| | | | US | 2014038057 A1 | 06-02-2014 |
| US 2012270093 | A1 | 25-10-2012 | CN | 102511104 A | 20-06-2012 |
| | | | EP | 2544290 A1 | 09-01-2013 |
| | | | JP | 5492287 B2 | 14-05-2014 |
| | | | US | 2012270093 A1 | 25-10-2012 |
| | | | US | 2013280586 A1 | 24-10-2013 |
| | | | WO | 2011108106 A1 | 09-09-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MOTOJI JINPO et al.** Biryushi Handbook. Asakura shoten K.K, 1991

- **SOHACHIRO HAYAKAWA.** Huntaibussei Sokutei-hou. Asakura shoten K.K, 1978